# EUROPEAN PATENT SPECIFICATION

(11) **EP 1 697 834 B1**
(45) Date of publication and mention of the grant of the patent: **18.02.2009**
(21) Application number: 04803509.1
(22) Date of filing: 03.12.2004
(51) Int. Cl.: G06F 9/46

(54) **DATA PROCESSING SYSTEM AND METHOD**
DATENVERARBEITUNGSSYSTEM UND -VERFAHREN
SYSTÈME ET PROCÉDÉ DE TRAITEMENT DE DONNÉES

(30) Priority: 17.12.2003 EP 03028926
(43) Date of publication of application: 06.09.2006
(73) Proprietor: SAP AG, 69190 Walldorf (DE)
(72) Inventor: KLEIN, Markus, 67227 Frankenthal (DE); ROESNER, Kai-Michael, 76344 Eggenstein-Leopoldshafen (DE); WAGNER, Karl, 68259 Mannheim (DE)
(74) Representative: Richardt, Markus Albert
(86) International application number: PCT/EP2004/013790
(87) International publication number: WO 2005/059741

(56) References cited:
- EP-A- 1 298 525
- US-A- 5 991 802
- US-A- 6 167 517
- US-A1- 2002 161 857
- US-A1- 2003 131 152
- US-B1- 6 182 076

## Description

### Field of the invention

The present invention relates to the field of data processing, and more particularly to providing a return value to an application program.

### Background and prior art

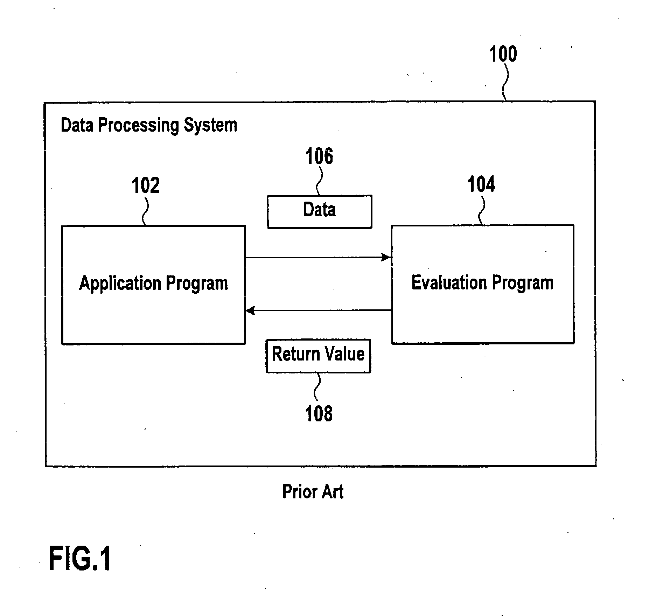

In many data processing systems a calling application program provides data to another program that evaluates the data and provides a return value back to the calling application program. Figure 1 shows a schematic block diagram of the such a prior art data processing system 100.

Data processing system 100 has application program 102 and evaluation program 104. Application program 102 can send function call 106 that contains data to evaluation program 104. This invokes evaluation program 104 that evaluates the data contained in the function call 106 in order to provide a return value 108 back to application program 102.

Application program 102 and evaluation program 104 can be run on the same hardware or on different remote computers. In the latter case a request-response protocol, such as the hypertext transfer protocol (HTTP) can be used. In this case function call 106 is an HTTP request and return value 108 is communicated back from evaluation program 104 to application program 102 as a HTTP response.

Data processing system 100 can have various applications. For example application program 102 receives biometric data (e.g. from a biometric data acquisition module that is coupled to a CCD camera) and a user ID (e.g. form a chip card) and provides the biometric data and user ID to evaluation program 104 by means of function call 106. Evaluation program 104 evaluates the biometric data and calculates a confidence value that the person from which the biometric data has been acquired is in fact the person having the user ID as provided with function call 106. In other words, the return value is a confidence value that indicates the likelihood that the person from which the biometric data is acquired is the same as the person to which the user ID belongs. The confidence value is returned from evaluation program 104 to application program 102 as return value 108.

Another example is that application program 102 provides measurement data to evaluation program 104. For example the measurement data is acquired by sensors or by manual entry from an ongoing process, such as a production process. The measurement data provided to evaluation program 104 by means of function call 106 is evaluated in order to determine an actual status of the ongoing process. The actual status is signalled back to the application program 102 by means of return value 108.

Another example for usage of data processing system 100 is for the purpose of valuation, e.g. cost and/or price determination, of one or a plurality of products. In this instance application program 102 provides data such as product quantity, used materials, services etc. to evaluation program 104 that performs a corresponding valuation. The result of the valuation is returned as return value 108 to application program 102.

A common disadvantage of data processing systems of the type as shown in figure 1 is a lack of flexibility both concerning the evaluation functions performed by the evaluation program and the data that can be considered for performing the evaluation functions. This lack of flexibility is also disadvantageous in terms of the possibility of software re-use. Often there is a one to one relationship of application program and evaluation program as the interface between the application program and the evaluation program is so specific that the evaluation program cannot be used by other application programs. This often results in a duplication of resources as a separate evaluation program is required for similar evaluation tasks. As a consequence inefficient usage of the available data processing resources is made.

### Summary of the invention

The present invention relates to a data processing system, a data processing method, and a computer program product as defined in the independent claims 1, 4, and 7, respectivelly. In particular, the present invention provides for a data processing system comprising means for receiving a first data object from an application program. The first data object has a plurality of first data fields. Each one of the first data fields has a unique field name. Further the first data object may have data fields with other field names.

When the first data object is received by the data processing system a second data object is generated. Initially the second data object is empty and has a number of data fields with the unique field names as specified in the data processing system. Data is transferred from data fields of the first data object to data fields of the second data object having identical field names.

Further, a sub-set of the data fields of the second data object is identified in the data processing system. Data that is transferred to data fields of the sub-set is used for selecting one of a plurality of data processing functions stored by the data processing system. The data that is transferred to the second data object is evaluated by means of the selected one of the data processing functions and a resulting value is returned to the application program.

In accordance with a further preferred embodiment of the invention a rule base is used for selecting one of the data processing functions. One or more of the rules of the rule base are applied to the data transferred to the sub-set of data fields of the second data object in order to select one of the data processing functions.

In accordance with a further preferred embodiment of the invention at least one graphical user interface is provided in order to edit the unique field names, modify the sub-set, the data processing functions and/or the rule base.

The present invention is particularly advantageous as it provides a flexible data processing system that can be used by various application programs. Data consistency is provided by the definition of unique field names without further constraints. This semantic flexibility is combined with algorithmic flexibility regarding the data processing functions themselves and the selection logic of the data processing functions. This combination provides both user friendliness, flexibility and the possibility of software reuse. In particular, the data processing system of the invention can be used for various application programs and various communication protocols across different technical platforms.

### Brief description of the drawings

In the following preferred embodiments of the invention will be described in greater detail by making reference to the drawings in which:
- Figure 1: is a block diagram of a prior art data processing system,
- Figure 2: is a block diagram of a first embodiment of a data processing system of the invention,

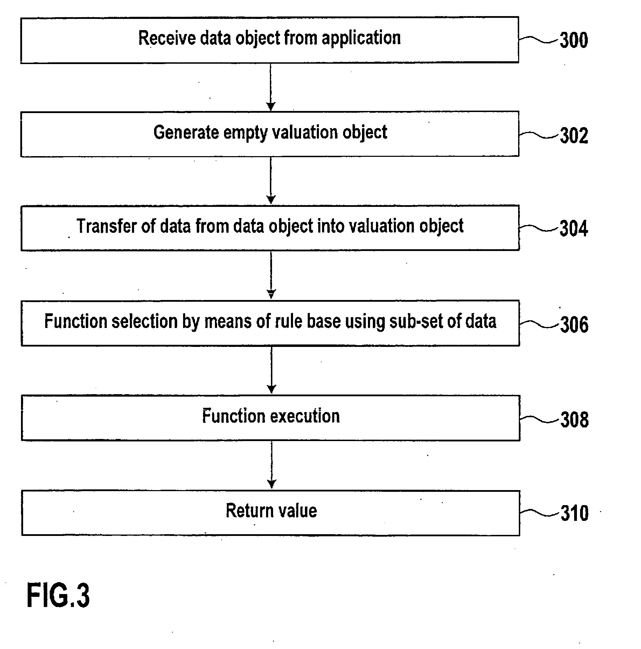

- Figure 3: is a flow chart illustrating the operation of the data processing system of figure 2,

### Detailed description

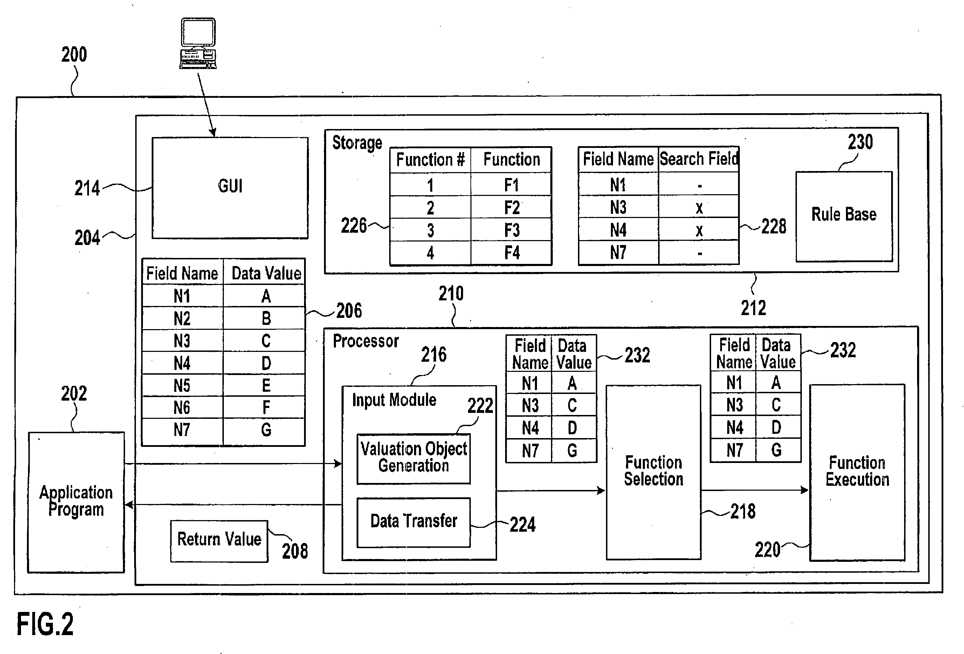

Figure 2 shows data processing system 200 having application program 202 and evaluation module 204. Application program 202 may or may not run on the same physical platform as evaluation module 204. For example, data processing system 200 is a single server computer for running both application program 202 and providing evaluation module 204. Alternatively application program 202 can be executed on a remote computer that communicates with the server computer that provides evaluation module 204 over a network connection.

Evaluation module 204 has processor 210, storage 212 and graphical user interface 214.

Processor 210 serves to execute program modules 216, 218 and 220. Program module 216 serves to receive data object 206 from application program 202. Program module 216 has program module 222 for generating an empty data object, e.g. a valuation object, in response to receipt of data object 206. Further program module 216 has program module 224 for transferring data from data object 206 into the initially empty valuation object.

Program module 218 serves for the purpose of function selection of one of the data processing functions stored in storage 212. Program module 220 serves to execute the data processing function that has been selected by program module 218.

The data processing functions are stored in storage 212. in the example considered here the data processing functions F1, F2, F3 and F4 are stored in table 226. The data processing functions can be entered and edited in table 226 by means of graphical user interface 214.

Further a table 228 is stored in storage 212. Table 228 has a list of unique field names N1, N3, N4, and N7. A sub-set of the unique field names is identified as search fields in table 228, i.e. field names N3 and N4 as shown in figure 2. This identification can be performed by storing a one bit identifier that identifies a given field name in the table 228 to belong to the sub-set or not.

Data that is transferred into data fields having field names N3 and N4 is used by program module 218 for selection of the data processing function from table 226. This selection is performed by program module 218 by applying one or more rules of rule base 230 to data that is transferred into the search fields N3 and/or N4.

Table 228 and rules of rule base 230 can be entered and/or edited by means of graphical user interface 214.

In operation application program 202 sends data object 206 to evaluation module 204. Data object 206 has a number of data fields N1 to N7 some of which have field names contained in table 228.

In response program module 216 is invoked and program module 222 generates an initially empty valuation object 232 that is used for internal processing within evaluation module 204. Program module 224 transfers data values of data fields having identical field names from data object 206 to valuation object 232. In other words, program module searches the field names of the data object 206 for field names that also exist in the valuation object 232. When a field name in data object 206 is identified that also occurs in valuation object 232, the data value assigned to that field in data object 206 is copied into the field having the same field name in valuation object 232. This way valuation object 232 is filled with data values.

It is to be noted that the content of valuation object 232 is determined by table 228 in as far as table 228 specifies the unique field names of the data fields of valuation object 232. This semantic definition of the data fields by table 228 is used to transfer data from data object 206 to valuation object 232.

Valuation object 232 is entered into program module 218 that reads the data from the data fields of valuation object 232 that are identified as search fields in table 228. Further program module 218 applies one or more rules of rule base 230 to the data contained in the search fields of valuation object 232 in order to select one of the data processing functions from table 226.

Next valuation object 232 is entered into program module 220 in order to apply the selected data processing function to valuation object 232. The resulting value is returned as return value 208 to application program 202.

### List of Reference Numerals

- 100: data processing system
- 102: application program
- 104: evaluation program
- 106: function call
- 108: return value
- 200: data processing system
- 202: application program
- 204: evaluation module
- 206: data object
- 208: return value
- 210: processor
- 212: storage
- 214: graphical user interface
- 216: program module
- 218: program module
- 220: program module
- 222: program module
- 224: program module
- 226: table
- 228: table
- 230: rule base
- 232: valuation object

## Claims

1. A data processing system comprising:
- means (216) for receiving a first data object (206) from an application program (202), the first data object having a plurality of first data fields, each one of the first data fields having a unique field name,
- means (222) for providing a second data object (232) in response to receipt of the first data object, the second data object having a plurality of second data fields, each one of the second data fields having one of the unique field names,
- means (226) for storing a plurality of data processing functions comprising a table (226) for storing the plurality of data processing functions,
- means (224) for transferring data from the first data fields having unique field names to the second data fields having identical unique field names,
- means (228) for storing the unique field names of the second data object and for defining a sub-set of the second data fields, wherein data in the sub-set of the second data fields is used for selecting one of a plurality of data processing functions stored by the data processing system, wherein unique field names of the sub-set of the second data fields are identified as search fields in a table (228), wherein this identification is performed by storing a one bit identifier that identifies a given field name in the table (228) to belong to the sub-set or not,
- means (218; 230) for selecting one of the plurality of data processing functions on the basis of the data that has been transferred to the sub-set of the second data fields, wherein the selection is performed by a program module (218) by applying one or more rules of a rule base (230) to data that is transferred into the search fields,
- means (220) for executing a selected one of the data processing functions using the data of the second data object as input and using an output of the selected data processing function to provide a return value (208) for the application program.

2. The data processing system of claim 1, further comprising at least one graphical user interface (214) for editing at least one of the unique field names and the data processing functions.

3. The data processing system of claim 1 or 2, further comprising a plurality of application programs for sending a plurality of data objects to the means for providing a second data object, each one of the data objects of the plurality application programs having data fields with the unique field names.

4. A data processing method for providing a return value to an application program (202), the data processing method comprising the steps of:
- storing unique field names of a second data object (232) in a data processing system (100) for defining a sub-set of second data fields,
- storing a plurality of data processing functions in the data processing system in a table (226),
- receiving a first data object (206) from the application program, the first data object having a plurality of first data fields, each one of the first data fields having a unique field name,
- providing the second data object in response to receipt of the first data object, the second data object having a number of second data fields corresponding to the unique field names stored in the data processing system,
- transferring data from the first data fields having unique field names to the second data fields having identical unique field names,
- selecting one of the plurality of data processing functions on the basis of data that has been transferred to the sub-set of the second data fields, wherein the sub-set of the second data fields are identified as search fields in a table (228), wherein this identification is performed by storing a one bit identifier that identifies a given field name in the table (228) to belong to the sub-set or not, and wherein the selection is performed by a program module (218) by applying one or more rules of a rule base (230) to data that is transferred into the search fields,
- executing a selected one of the data processing functions using the data of the second data object as input and using an output of the selected data processing function to provide a return value (208) for the application program.

5. The data processing method of claim 4, further comprising editing at least one of the unique field names, the data processing functions and the rule base by means of a graphical user interface (214).

6. The method of claim 4 or 5, further comprising providing a plurality of application programs (102) for sending of first data objects to the data processing system, each one of the first data objects having first data fields having the unique field names.

7. A computer program product for providing a return value (208) to an application program (102) for execution by a data processing system (100) having means (228) for storing unique field names of a second data object (232) and for defining a sub-set of second data fields, wherein data in the sub-set is used for selecting one of a plurality of data processing functions stored by the data processing system, and means (226) for storing a plurality of data processing functions comprising a table (226) for storing the plurality of data processing functions the computer program product comprising instructions for:
- receiving a first data object (206) from the application program, the first data object having a plurality of first data fields, each one of the first data fields having one of the unique field names, and having further data fields having other field names,
- providing the second data object in response to receipt of the first data object, the second data object having a plurality of second data fields, each one of the second data fields having one of the unique field names,
- transferring data from the first data fields having unique field names to the second data fields having identical unique field names,
- selecting one of the plurality of data processing functions on the basis of data that has been transferred to the sub-set of the second data fields, wherein the sub-set of the second data fields are identified as search fields in a table (228), wherein this identification is performed by storing a one bit identifier that identifies a given field name in the table (228) to belong to the sub-set or not, and wherein the selection is performed by a program module (218) by applying one or more rules of a rule base (230) to data that is transferred into the search fields,
- executing a selected one of the data processing functions using the data of the second data object as input and using an output of the selected data processing function to provide the return value to the application program.

8. The computer program product of claims 7, further comprising instructions for editing at least one of the unique field names, the data processing functions and the rule base by means of a graphical user interface (214).

9. The computer program product of any one of the preceding claims 7 to 8, further comprising providing a plurality of application programs (102) for sending of first data objects to the data processing system, each one of the first data objects having first data fields having the unique field names.

## Patentansprüche

1. Datenverarbeitungssystem, das umfasst:
- ein Mittel (216) zum Empfangen eines ersten Datenobjektes (206) von einem Anwendungsprogramm (202), wobei das erste Datenobjekt eine Vielzahl von ersten Datenfeldern hat, wobei jedes erste Datenfeld einen eindeutigen Feldnamen hat,
- ein Mittel (222) zum Bereitstellen eines zweiten Datenobjektes (232) als Antwort auf den Empfang des ersten Datenobjektes, wobei das zweite Datenobjekt eine Vielzahl von zweiten Datenfeldern hat, wobei jedes zweite Datenfeld einen der eindeutigen Feldnamen hat,
- ein Mittel (226) zum Speichern einer Vielzahl von Datenverarbeitungsfunktionen, das eine Tabelle (226) zum Speichern der Vielzahl von Datenverarbeitungsfunktionen umfasst,
- ein Mittel (224) zum Übertragen von Daten von den ersten Datenfeldern, die eindeutige Feldnamen haben, zu den zweiten Datenfeldern, die identische eindeutige Feldnamen haben,
- ein Mittel (228) zum Speichern der eindeutigen Feldnamen des zweiten Datenobjektes und zum Definieren einer Teilmenge der zweiten Datenfelder, wobei die Daten in der Teilmenge der zweiten Datenfelder zum Auswählen einer der Vielzahl von Datenverarbeitungsfunktionen verwendet werden, die von dem Datenverarbeitungssystem gespeichert sind, wobei eindeutige Feldnamen der Teilmenge der zweiten Datenfelder als Suchfelder in einer Tabelle (228) **gekennzeichnet** werden, wobei die Kennzeichnung durch Speichern eines Ein-Bit-Kennzeichens durchgeführt wird, das kennzeichnet, ob ein gegebener Feldname in der Tabelle (228) zu der Teilmenge gehört oder nicht,
- ein Mittel (218; 230) zum Auswählen einer der Vielzahl von Datenverarbeitungsfunktionen auf der Basis der Daten, die in die Teilmenge der zweiten Datenfelder übertragen worden sind, wobei die Auswahl durch ein Programmmodul (218) durchgeführt wird durch Anwenden einer Regel oder mehrerer Regeln einer Regelbasis (230) auf Daten, die in die Suchfelder übertragen werden,
- ein Mittel (220) zum Ausführen einer aus den Datenverarbeitungsfunktionen ausgewählten Datenverarbeitungsfunktion, wobei die Daten des zweiten Datenobjektes als Eingabe verwendet werden, und wobei eine Ausgabe der ausgewählten Datenverarbeitungsfunktion verwendet wird, um einen Rückgabewert (208) für das Anwendungsprogramm bereitzustellen.

2. Datenverarbeitungssystem nach Anspruch 1, das weiter wenigstens eine grafische Benutzerschnittstelle (214) zum Bearbeiten von wenigstens einem der eindeutigen Feldnamen und den Datenverarbeitungsfunktionen umfasst.

3. Datenverarbeitungssystem nach Anspruch 1 oder 2, das weiter eine Vielzahl von Anwendungsprogrammen zum Senden einer Vielzahl von Datenobjekten an das Mittel zum Bereitstellen eines zweiten Datenobjektes umfasst, wobei jedes Datenobjekt der Vielzahl von Anwendungsprogrammen Datenfelder mit den eindeutigen Feldnamen hat.

4. Datenverarbeitungsverfahren zum Bereitstellen eines Rückgabewertes an ein Anwendungsprogramm (202), wobei das Datenverarbeitungsverfahren die Schritte umfasst:
- Speichern eindeutiger Feldnamen eines zweiten Datenobjektes (232) in einem Datenverarbeitungssystem (100) zum Definieren einer Teilmenge der zweiten Datenfelder,
- Speichern einer Vielzahl von Datenverarbeitungsfunktionen in dem Datenverarbeitungssystem in einer Tabelle (226),
- Empfangen eines ersten Datenobjektes (206) von dem Anwendungsprogramm, wobei das erste Datenobjektes eine Vielzahl von ersten Datenfeldern hat, wobei jedes erste Datenfeld einen eindeutigen Feldnamen hat,
- Bereitstellen des zweiten Datenobjektes als Antwort auf den Empfang des ersten Datenobjektes, wobei das zweite Datenobjekt eine Anzahl von zweiten Datenfeldern entsprechend den eindeutigen Feldnamen hat, die in dem Datenverarbeitungssystem gespeichert sind,
- Übertragen von Daten von den ersten Datenfeldern, die eindeutige Feldnamen haben, an die zweiten Datenfelder, die identische eindeutige Feldnamen haben,
- Auswählen einer Datenverarbeitungsfunktion aus der Vielzahl von Datenverarbeitungsfunktionen auf der Basis von Daten, die an die Teilmenge der zweiten Datenfelder übertragen worden sind, wobei die Teilmenge der zweiten Datenfelder als Suchfelder in der Tabelle (228) **gekennzeichnet** sind, wobei die Kennzeichnung durch Speichern eines Ein-Bit-Kennzeichens durchgeführt wird, das kennzeichnet, ob ein gegebener Feldname in der Tabelle (228) zu der Teilmenge gehört oder nicht, und wobei die Auswahl durch ein Programmmodul (218) durchgeführt wird durch Anwenden einer Regel oder mehrerer Regeln einer Regelbasis (230) auf Daten, die in die Suchfelder übertragen werden,
- Ausführen einer aus den Datenverarbeitungsfunktionen ausgewählten Datenverarbeitungsfunktion, wobei die Daten des zweiten Datenobjektes als Eingabe verwendet werden, und wobei eine Ausgabe der ausgewählten Datenverarbeitungsfunktion verwendet wird, um einen Rückgabewert (208) für das Anwendungsprogramm bereitzustellen.

5. Datenverarbeitungsverfahren nach Anspruch 4, das weiter ein Bearbeiten wenigstens eines der eindeutigen Feldnamen, der Datenverarbeitungsfunktionen und der Regelbasis durch ein Mittel einer grafischen Benutzerschnittstelle (214) umfasst.

6. Datenverarbeitungsverfahren nach Anspruch 4 oder 5, das weiter ein Bereitstellen einer Vielzahl von Anwendungsprogrammen (102) zum Senden von ersten Datenobjekten an das Datenverarbeitungssystem umfasst, wobei jedes erste Datenobjekt erste Datenfelder hat, die die eindeutigen Feldnamen haben.

7. Computerprogrammprodukt zum Bereitstellen eines Rückgabewertes (208) an ein Anwendungsprogramm (202) zur Ausführung durch ein Datenverarbeitungssystem (100) mit einem Mittel (228) zum Speichern von eindeutigen Feldnamen eines zweiten Datenobjektes (232) and zum Definieren einer Teilmenge von zweiten Datenfeldern, wobei Daten in der Teilmenge zum Auswählen einer Datenverarbeitungsfunktion aus einer Vielzahl von Datenverarbeitungsfunktionen verwendet werden, die durch das Datenverarbeitungssystem gespeichert sind, und einem Mittel (226) zum Speichern einer Vielzahl von Datenverarbeitungsfunktionen, das eine Tabelle (226) zum Speichern der Vielzahl von Datenverarbeitungsfunktionen umfasst, wobei das Computerprogrammprodukt Anweisungen umfasst zum:
- Empfangen eines ersten Datenobjektes (206) von dem Anwendungsprogramm, wobei das erste Datenobjekt eine Vielzahl von ersten Datenfeldern hat, wobei jedes erste Datenfeld einen eindeutigen Feldnamen hat, und weitere Datenfelder mit anderen Feldnamen hat,
- Bereitstellen des zweiten Datenobjektes als Antwort auf das erste Datenobjekt, wobei das zweiten Datenobjekt eine Vielzahl von zweiten Datenfeldern hat, wobei jedes zweite Datenfeld einen der eindeutigen Feldnamen hat,
- Übertragen von Daten von den ersten Datenfeldern, die eindeutige Feldnamen haben, an die zweiten Datenfelder, die identische eindeutige Feldnamen haben,
- Auswählen einer Datenverarbeitungsfunktion aus der Vielzahl von Datenverarbeitungsfunktionen auf der Basis von Daten, die an die Teilmenge der zweiten Datenfelder übertragen worden sind, wobei die Teilmenge der zweiten Datenfelder als Suchfelder in der Tabelle (228) **gekennzeichnet** sind, wobei die Kennzeichnung durch Speichern eines Ein-Bit-Kennzeichens durchgeführt wird, das kennzeichnet, ob ein gegebener Feldname in der Tabelle (228) zu der Teilmenge gehört oder nicht, und wobei die Auswahl durch ein Programmmodul (218) durchgeführt wird durch Anwenden einer Regel oder mehrerer Regeln einer Regelbasis (230) auf Daten, die in die Suchfelder übertragen werden,
- Ausführen einer aus den Datenverarbeitungsfunktionen ausgewählten Datenverarbeitungsfunktion, wobei die Daten des zweiten Datenobjektes als Eingabe verwendet werden, und wobei eine Ausgabe der ausgewählten Datenverarbeitungsfunktion verwendet wird, um einen Rückgabewert (208) für das Anwendungsprogramm bereitzustellen.

8. Computerprogrammprodukt nach Anspruch 7, das weiter Anweisungen zum Bearbeiten wenigstens eines der eindeutigen Feldnamen, der Datenverarbeitungsfunktionen und der Regelbasis durch ein Mittel einer grafischen Benutzerschnittstelle (214) umfasst.

9. Computerprogrammprodukt nach einem der vorstehenden Ansprüche 7 bis 8, das weiter ein Bereitstellen einer Vielzahl von Anwendungsprogrammen (102) zum Senden von ersten Datenobjekten an das Datenverarbeitungssystem umfasst, wobei jedes erste Datenobjekt erste Datenfelder hat, die die eindeutigen Feldnamen haben.

## Revendications

1. Système de traitement de données comprenant :
- des moyens (216) pour recevoir un premier objet de données (206) en provenance d'un programme d'application (202), le premier objet de données ayant une pluralité de premiers champs de données, chacun des premiers champs de données ayant un nom de champ unique,
- des moyens (222) pour délivrer un second objet de données (232) en réponse à la réception du premier objet de données, le second objet de données ayant une pluralité de seconds champs de données, chacun des seconds champs de données ayant l'un des noms de champs uniques,
- des moyens (226) pour stocker une pluralité de fonctions de traitement de données comprenant un tableau (226) pour stocker la pluralité de fonctions de traitement de données,
- des moyens (224) pour transférer des données depuis les premiers champs de données ayant des noms de champs uniques vers les seconds champs de données ayant des noms de champs uniques identiques,
- des moyens (228) pour stocker les noms de champs uniques du second objet de données et pour définir un sous-ensemble des seconds champs de données, des données dans le sous-ensemble des seconds champs de données étant utilisées pour sélectionner une fonction parmi une pluralité de fonctions de traitement de données stockées par le système de traitement de données, des noms de champs uniques du sous-ensemble des seconds champs de données étant identifiés en tant que champs de recherche dans un tableau (228), cette identification étant effectuée en stockant un identifiant à bit unique qui identifie un nom de champ donné dans le tableau (228) comme appartenant ou non au sous-ensemble,
- des moyens (218 ; 230) pour sélectionner une fonction parmi la pluralité de fonctions de traitement de données sur la base des données qui ont été transférées vers le sous-ensemble des seconds champs de données, la sélection étant effectuée par un module de programme (218) en appliquant une ou plusieurs règles d'une base de règles (230) à des données qui sont transférées dans les champs de recherche,
- des moyens (220) pour exécuter une fonction sélectionnée parmi les fonctions de traitement de données en utilisant les données du second objet de données en tant qu'entrée et en utilisant une sortie de la fonction de traitement de données sélectionnée pour délivrer une valeur de retour (208) pour le programme d'application.

2. Système de traitement de données selon la revendication 1, comprenant en outre une interface graphique utilisateur (214) pour modifier au moins un élément parmi les noms de champs uniques et les fonctions de traitement de données.

3. Système de traitement de données selon la revendication 1 ou 2, comprenant en outre une pluralité de programmes d'application pour envoyer une pluralité d'objets de données aux moyens afin de délivrer un second objet de données, chacun des objets de données de la pluralité de programmes d'application ayant des champs de données avec les noms de champs uniques.

4. Procédé de traitement de données pour délivrer une valeur de retour à un programme d'application (202), le procédé de traitement de données comprenant les étapes de :
- stocker des noms de champs uniques d'un second objet de données (232) dans un système de traitement de données (100) pour définir un sous-ensemble de seconds champs de données,
- stocker une pluralité de fonctions de traitement de données dans le système de traitement de données dans un tableau (226),
- recevoir un premier objet de données (206) en provenance du programme d'application, le premier objet de données ayant une pluralité de premiers champs de données, chacun des premiers champs de données ayant un nom de champ unique,
- délivrer le second objet de données en réponse à la réception du premier objet de données, le second objet de données ayant un certain nombre de seconds champs de données correspondant aux noms de champs uniques stockés dans le système de traitement de données,
- transférer des données depuis les premiers champs de données ayant des noms de champs uniques vers les seconds champs de données ayant des noms de champs uniques identiques,
- sélectionner une fonction parmi la pluralité de fonctions de traitement de données sur la base de données qui ont été transférées vers le sous-ensemble des seconds champs de données, le sous-ensemble des seconds champs de données étant identifié en tant que champs de recherche dans un tableau (228), cette identification étant effectuée en stockant un identifiant à bit unique qui identifie un nom de champ donné dans le tableau (228) comme appartenant ou non au sous-ensemble, et la sélection étant effectuée par un module de programme (218) en appliquant une ou plusieurs règles d'une base de règles (230) à des données qui sont transférées dans les champs de recherche,
- exécuter une fonction sélectionnée parmi les fonctions de traitement de données en utilisant les données du second objet de données en tant qu'entrée et en utilisant une sortie de la fonction de traitement de données sélectionnée pour délivrer une valeur de retour (208) pour le programme d'application.

5. Procédé de traitement de données selon la revendication 4, comprenant en outre l'étape de modifier au moins un élément parmi les noms de champs uniques, les fonctions de traitement de données et la base de règles par l'intermédiaire d'une interface graphique utilisateur (214).

6. Procédé selon la revendication 4 ou 5, comprenant en outre l'étape de fournir une pluralité de programmes d'application (102) pour l'envoi de premiers objets de données au système de traitement de données, chacun des premiers objets de données ayant des premiers champs de données ayant les noms de champs uniques.

7. Produit de programme informatique pour délivrer une valeur de retour (208) à un programme d'application (102) pour l'exécution par un système de traitement de données (100) ayant des moyens (228) pour stocker des noms de champs uniques d'un second objet de données (232) et pour définir un sous-ensemble de seconds champs de données, des données dans le sous-ensemble étant utilisées pour sélectionner une fonction parmi une pluralité de fonctions de traitement de données stockées par le système de traitement de données, et des moyens (226) pour stocker une pluralité de fonctions de traitement de données comprenant un tableau (226) pour stocker la pluralité de fonctions de traitement de données, le produit de programme informatique comprenant des instructions pour :
- recevoir un premier objet de données (206) en provenance du programme d'application, le premier objet de données ayant une pluralité de premiers champs de données, chacun des premiers champs de données ayant l'un des noms de champs uniques, et ayant en outre des champs de données ayant d'autres noms de champs,
- délivrer le second objet de données en réponse à la réception du premier objet de données, le second objet de données ayant une pluralité de seconds champs de données, chacun des seconds champs de données ayant l'un des noms de champs uniques,
- transférer des données depuis les premiers champs de données ayant des noms de champs uniques vers les seconds champs de données ayant des noms de champs uniques identiques,
- sélectionner une fonction parmi la pluralité de fonctions de traitement de données sur la base de données qui ont été transférées vers le sous-ensemble des seconds champs de données, le sous-ensemble des seconds champs de données étant identifié en tant que champs de recherche dans un tableau (228), cette identification étant effectuée en stockant un identifiant à bit unique qui identifie un nom de champ donné dans le tableau (228) comme appartenant ou non au sous-ensemble, la sélection étant effectuée par un module de programme (218) en appliquant une ou plusieurs règles d'une base de règles (230) à des données qui sont transférées dans les champs de recherche,
- exécuter une fonction sélectionnée parmi les fonctions de traitement de données en utilisant les données du second objet de données en tant qu'entrée et en utilisant une sortie de la fonction de traitement de données sélectionnée pour délivrer la valeur de retour au programme d'application.

8. Produit de programme informatique selon la revendication 7, comprenant en outre des instructions pour modifier au moins un élément parmi les noms de champs uniques, les fonctions de traitement de données et la base de règles par l'intermédiaire d'une interface graphique utilisateur (214).

9. Produit de programme informatique selon l'une quelconque des revendications 7 à 8 précédentes, comprenant en outre l'étape de fournir une pluralité de programmes d'application (102) pour envoyer des premiers objets de données au système de traitement de données, chacun des premiers objets de données ayant des premiers champs de données ayant les noms de champs uniques.
